# EUROPÄISCHE PATENTSCHRIFT

(11) **EP 3 120 099 B1**
(45) Veröffentlichungstag und Bekanntmachung des Hinweises auf die Patenterteilung: **12.06.2019**
(21) Anmeldenummer: 15710466.2
(22) Anmeldetag: 10.03.2015
(51) Int. Cl.: F28F 27/00

(54) **WÄRMETAUSCHER, REAKTORANORDNUNG UMFASSEND DIESEN WÄRMETAUSCHER UND VERFAHREN ZUM TEMPERIEREN EINES REAKTORS**
HEAT EXCHANGER, REACTOR ARRANGEMENT COMPRISING SAID HEAT EXCHANGER, AND METHOD FOR TEMPERATURE CONTROL OF A REACTOR
ÉCHANGEUR DE CHALEUR, SYSTÈME DE RÉACTEUR COMPRENANT CET ÉCHANGEUR DE CHALEUR ET PROCÉDÉ D'ÉQUILIBRAGE THERMIQUE D'UN RÉACTEUR

(30) Priorität: 18.03.2014 DE 102014103691; 18.03.2014 US 201461954669 P
(43) Veröffentlichungstag der Anmeldung: 25.01.2017
(73) Patentinhaber: BASF SE, 67056 Ludwigshafen am Rhein (DE)
(72) Erfinder: HAMMON, Ulrich, 68163 Mannheim (DE); WALTER, Thomas, 67454 Haßloch (DE); SCHRAUT, Armin, 64625 Bensheim (DE)
(74) Vertreter: Patzelt, Andrea
(86) Internationale Anmeldenummer: PCT/EP2015/054962
(87) Internationale Veröffentlichungsnummer: WO 2015/140009

(56) Entgegenhaltungen:
- EP-A1- 1 080 781
- EP-A2- 1 882 518
- WO-A2-2010/034292
- DE-A1- 2 207 166
- DE-A1-102004 041 777
- DE-B- 1 057 623
- DE-C- 898 917
- GB-A- 2 126 116

## Beschreibung

Die vorliegende Erfindung bezieht sich auf einen Wärmetauscher, auf eine Reaktoranordnung, die einen Reaktor und diesen Wärmetauscher umfasst, sowie auf ein Verfahren zum Temperieren eines Reaktors. EP 1 882 518 A2 offenbart einen Wärmetauscher mit den Merkmalen im Oberbegriff des Patentanspruchs 1.

Wärmetauscher für Reaktoren und ähnliche Geräte sind aus dem Stand der Technik prinzipiell bekannt. So beschreibt DE 22 07 166 A1 ein Kühlaggregat für Reaktionsapparate mit einem im Kreislauf geführten Wärmeträger, für den eine Umwälzpumpe und ein Kühler außerhalb eines Reaktionsbehälters angeordnet sind. Hierin sind die Umwälzpumpe und der Kühler in zwei nebeneinander angeordneten Gehäusen untergebracht. Ferner ist ein Ausdehnungsgefäß für den Wärmeträger über und in Verbindung mit dem Pumpengehäuse sowie ein Dampfabscheider für das Kühlmittel unmittelbar über dem Kühlergehäuse und in Verbindung mit den Kühlerrohren angeordnet. Im Deckel des Ausdehnungsgefäßes kann eine Berstscheibe angeordnet sein.

DE 10 2006 034 811 A1 beschreibt im Zusammenhang mit einem Verfahren zur Temperaturänderung eines Rohrbündelreaktors einen Salzbadkühler, dessen Kühlmedium nicht speziell beschränkt wird. Der Kühler verfügt über einen Ausgleichsbehälter, in dem eine Füllstandmessung angeordnet ist. Bei Erreichen eines vorbestimmten Füllstandwertes fließt der überschüssige Wärmeträger über einen Überlauf, beziehungsweise einen Notentlastungsstutzen ab. Neben der Tatsache, dass der Notentlastungsstutzen bei übermäßiger Ausdehnung des Wärmeträgers genutzt wird, wirkt er auch für den Fall, in dem zum Beispiel ein Rohr eines Verdampfungskühlers reißt.

Kritisch beim Betrieb eines gattungsgemäßen Wärmetauschers, der als Kühler betrieben wird, ist der Moment der Leckage. In den Kühlerrohren stehen Wasser / Wasserdampf mit 50 bar oder mehr unter Druck. Reißt nun eines der Kühlerrohre, wird das Wasser unter diesem Druck in den Wärmeträger eingedrückt. Da der flüssige Wärmeträger beispielsweise bei einer Temperatur von ca. 280 °C zirkuliert wird, verdampft das Wasser schlagartig, so dass sich spontan ein hoher Druck aufbaut.

Im Stand der Technik sind, die vorstehend beschrieben, somit Vorkehrungen getroffen, um bei auftretendem Überdruck den Wärmetauscher, bzw. Kühler zu entlasten. Allerdings haben sich diese Einrichtungen in der Praxis nicht vollständig bewährt.

Gattungsgemäße Wärmetauscher, insbesondere Salzbadkühler, können eine Höhe zwischen 4 m und 8 m haben. Die im Stand der Technik beschriebenen, eher unwahrscheinlichen Fälle, dass ein Kühlerrohr reißt, treten in der Praxis trotz größter Sorgfalt und guter Wartung der Anlagen immer wieder auf. Hierbei wurde beobachtet, dass solche sogenannten Rohrreißer vor allem im unteren Bereich der Kühlerrohre, das heißt, in nur geringem Abstand zum Kühlerrohrboden, vorkommen.

Wird als Kühlmedium Wasser verwendet, welches durch den Wärmeträger verdampft wird, so steht dieses im unteren Bereich der Kühlerrohre in der Regel bis zu einer gewissen Höhe in flüssiger Form. Gerade in diesem Bereich werden in der Praxis immer wieder Rohrreißer beobachtet, die unter anderem auf nicht bestimmungsgemäßen Betrieb der Kühler zurückzuführen sind. Ein anderer Grund für die Rohrreißer kann die mangelnde Qualität des Speisewassers sein, wodurch es zu nicht berücksichtigen Belastungen und/oder Korrosion kommt. Tritt nun ein Rohrreißer auf, muss der Dampf die über ihm liegende Wärmeträgersäule durchlaufen oder den Wärmeträger verdrängen, um über den aus dem Stand der Technik bekannten Notentlastungsstutzen, beziehungsweise die Berstscheibe den aufgebauten Druck zu entspannen. Insbesondere bei den herkömmlicherweise eingesetzten Wärmeträgern mit höherer Dichte, zum Beispiel bei Salzbädern mit einer Dichte von 2, ist ein solches Durchlaufen oder Verdrängen nur sehr schwer möglich.

Als Folge wird der Mantel des Kühlers mit einem Druck beaufschlagt, für den dieser normalerweise nicht ausgelegt ist. In der Regel werden gattungsgemäße Wärmetauscher, d.h. insbesondere Kühler mit flüssigem Wärmeträger drucklos ausgelegt. Im schlimmsten Fall kann ein Druckaufbau infolge eines Rohrreißers dazu führen, dass der Mantel des Kühlers selbst reißt und sich der Wärmeträger nach außen ergießt. Hierdurch entsteht eine akute Gefahr für Menschen und Umwelt.

Angesichts der Nachteile des Standes der Technik liegt der vorliegenden Erfindung die Aufgabe zugrunde, einen verbesserten Wärmetauscher bereitzustellen, der insbesondere eine schnelle und sichere Druckentlastung im Falle einer Leckage gewährleistet. Es ist ein weiteres Ziel, eine entsprechende Reaktoranordnung zu schaffen sowie ein Verfahren zum Temperieren eines Reaktors anzugeben, welche die Nachteile des Standes der Technik nicht aufweisen.

Die vorstehend genannte Aufgabe wird in einem ersten Aspekt der Erfindung durch einen Wärmetauscher (1) gelöst, der umfasst
- ein Bündel von zumindest zwei Wärmetauscherrohren (3), wobei das Bündel von Wärmetauscherrohren (3) vertikal ausgerichtet ist und nach unten von einem Wärmetauscherrohrboden (31) abgeschlossen wird,
- ein das Bündel von Wärmetauscherrohren (3) umgebendes Wärmetauschergehäuse (5), wobei das Bündel von Wärmetauscherrohren (3) in dem Wärmetauschergehäuse (5) von einem flüssigen Wärmeträger (7) umspült wird,
- eine das Wärmetauschergehäuse (5) nach oben abschließende Wärmetauscherhaube (9),
- einen das Wärmetauschergehäuse (5) nach unten abschließenden Wärmetauscherboden (11),
- einen am Wärmetauschergehäuse (5) vorgesehenen Zulauf (13) für den Wärmeträger (7) in den Wärmetauscher (1),
- einen am Wärmetauschergehäuse (5) vorgesehenen Ablauf (15) für den Wärmeträger (7) aus dem Wärmetauscher (1) und
- ein Notentlastungsstutzen (17), der in der Nähe der Wärmetauscherhaube (9) angeordnet ist.

Der Wärmetauscher (1) ist dadurch gekennzeichnet, dass der Wärmetauscher (1) eine zweite Sicherheitseinrichtung (19) aufweist, die in der Nähe des Wärmetauscherbodens (11) angeordnet ist wobei die zweite Sicherheitseinrichtung eine Notentspannung ist.

In einem zweiten Aspekt der Erfindung ist der vorstehend beschriebene Wärmetauscher (1) in eine Reaktoranordnung (101) integriert. Diese Reaktoranordnung (101) umfasst
- einen Reaktor (27)
- einen mit dem Reaktor (27) verbundenen Wärmetauscher (1), wie er vorstehend definiert ist,
- eine mit dem Reaktor (27) und/oder dem Wärmetauscher (1) verbundene Pumpe (29) zum Umwälzen zumindest eines Teils des flüssigen Wärmeträgers (7).

Mit dem erfindungsgemäßen Wärmetauscher (1), beziehungsweise mit der erfindungsgemäßen Reaktoranordnung (101) kann in einem dritten Aspekt der Erfindung das erfindungsgemäße Verfahren zum Temperieren eines Reaktors (27) durchgeführt werden. Dieses Verfahren umfasst die Schritte
a) Einleiten zumindest eines Teils eines flüssigen Wärmeträgers (7), der mit einer ersten Temperatur T1 aus dem Reaktor (27) abgeführt wird, durch einen Zulauf in den Wärmetauscher (1), wie er vorstehend definiert ist,
b) Umspülen der Wärmetauscherrohre (3) des Wärmetauschers (1) mit dem flüssigen Wärmeträger (7), wobei Wärme zwischen dem Wärmeträger (7) und den Wärmetauscherrohren (3) ausgetauscht wird,
c) Ableiten des flüssigen Wärmeträgers (7) mit einer zweiten Temperatur T2 aus dem Wärmetauscher (1) und Zuführen des flüssigen Wärmeträgers (7) zu dem Reaktor (27),
wobei im Falle einer Druckerhöhung in dem Wärmetauscher (1) der entstehende Überdruck zumindest über eine Sicherheitseinrichtung (19) abgebaut wird.

Sofern in der nachfolgenden Beschreibung im Zusammenhang mit dem erfindungsgemäßen Wärmetauscher (1) und/oder der erfindungsgemäßen Reaktoranordnung (101) auch Verfahrensmerkmale aufgeführt werden, beziehen sich diese vorzugsweise auf das erfindungsgemäße Verfahren, das nachstehend noch näher definiert wird.

Der erfindungsgemäße Wärmetauscher (1) hat den Vorteil, dass durch das Vorsehen der Sicherheitseinrichtung (19) in der Nähe des Wärmetauscherbodens (11) ein Überdruck auf der Seite des flüssigen Wärmeträgers (7) schnell und sicher abgebaut werden kann, ohne dass dazu der im Wärmetauscher (1) befindliche Wärmeträger (7) über den größten Teil der Höhe des Wärmetauschers (1) verdrängt oder durchlaufen werden muss. Somit wird ein Wärmetauscher (1) bereitgestellt, der im Wesentlichen gegen alle Druckerhöhungen abgesichert ist. Durch das Vorsehen der Sicherheitseinrichtung (19) kann das Wärmetauschergehäuse (5) ferner drucklos ausgelegt werden, was sich in den Kosten für den Wärmetauscher (1), beziehungsweise die Gesamtanlage niederschlägt.

Drucklos bedeutet in diesem Fall, dass keine Vorkehrungen gegen Drücke von mehr als 5 bar getroffen werden müssen. Natürlich ist das Wärmetauschergehäuse (5) zusammen mit der Wärmetauscherhaube (9) und dem Wärmetauscherboden (11) für einen Druck von bis zu 3 bar ausgelegt, den der Wärmeträger (7) hydrostatisch aufbringt und der durch eine Umwälzpumpe für den Wärmeträger (7) erzeugt wird.

Die Formulierung "in der Nähe" in Bezug auf die Wärmetauscherhaube (9) und den Wärmetauscherboden (11) bedeutet, dass der Notentlastungsstutzen (17) im oberen Drittel, insbesondere im oberen Viertel des Wärmetauschergehäuses (5) angeordnet ist, und dass die Sicherheitseinrichtung (19) im unteren Drittel, insbesondere im unteren Viertel und ganz besonders bevorzugt im unteren Fünftel des Wärmetauschergehäuses (5) angeordnet ist.

Nachfolgend wird die Erfindung detaillierter beschrieben.

Ein erster Gegenstand der vorliegenden Erfindung ist ein Wärmetauscher (1), der ein Bündel von zumindest zwei Wärmetauscherrohren (3), ein Wärmetauschergehäuse (5), eine Wärmetauscherhaube (9), einen Wärmetauscherboden (11), einen Zulauf (13) und einen Ablauf (15) sowie einen Notentlastungsstutzen (17) umfasst. Der erfindungsgemäße Wärmetauscher (1) zeichnet sich dadurch aus, dass er eine Sicherheitseinrichtung (19) aufweist, die in der Nähe des Wärmetauscherbodens (11) angeordnet ist.

Der erfindungsgemäße Wärmetauscher (1) ist in einer speziellen Ausführungsform ein Kühler.

Gemäss dem erfindungsgemäßen Wärmetauschers (1) ist die Sicherheitseinrichtung (19) eine Notentspannung. Unter "Notentspannung" im Sinne der vorliegenden Erfindung wird im Wesentlichen eine Rohrleitung verstanden, die in der Nähe des Wärmetauscherbodens (11) aus dem Wärmetauschergehäuse (5) herausführt und im Wesentlichen vertikal nach oben führt, so dass die Notentspannung mindestens über den Flüssigkeitsspiegel des flüssigen Wärmeträgers (7) im Wärmetauschergehäuse (5) hinaus reicht. Hierdurch kann der Druckverlust, der beim Durchströmen des Bündels von Wärmetauscherrohren (3) entsteht, ausgeglichen werden. Im bestimmungsgemäßen Betrieb ist die Sicherheitseinrichtung (19) bis zu einem bestimmten Niveau mit dem flüssigen Wärmeträger (7) gefüllt. Vorzugsweise ist die Sicherheitseinrichtung (19) mit einer Begleitheizung versehen, um den flüssigen Wärmeträger (7) auf im Wesentlichen der gleichen Viskosität zu halten wie den Wärmeträger (7) im Inneren des Wärmetauschers (1).

Wird im Wärmetauscher (1) nun ein Druck aufgebaut, der dessen normalen Betriebsdruck wesentlich übersteigt, d. h. ein Druck von mehr als 3 bar, kann dieser Druck dadurch entspannt werden, dass die Wärmeträgersäule in der Sicherheitseinrichtung (19) nach oben gedrückt wird. Das heißt am Beispiel eines Rohrreißers mit dem Austritt von Wasser und/oder Dampf kann der im Wärmeträger (7) entstehende Wasserdampf sich in einfacher und vorteilhafter Weise in die Sicherheitseinrichtung (19) ausdehnen. Der Wasserdampf hat hierbei eine wesentlich geringere Säule des Wärmeträgers (7) zu verdrängen, beziehungsweise zu durchdringen, verglichen mit der Masse des Wärmeträgers (7) im Inneren des Wärmetauschers (1). Vorteilhafterweise liegt der Durchmesser der Sicherheitseinrichtung (19) zwischen 100 mm und 800 mm.

In diesem Zusammenhang hat es sich als vorteilhaft erwiesen, wenn das Verhältnis der freien Querschnittsfläche der Sicherheitseinrichtung (19) zur freien Querschnittsfläche eines Wärmetauscherrohres (3) zwischen 15 und 1.600 liegt. Mit diesem Verhältnis wird im Leckagefall eines Wärmetauscherrohres (3) gewährleistet, dass das austretende Dampf/Flüssigkeits-Gemisch ohne großen Druckaufbau im Wärmetauschergehäuse (5) abgeführt werden kann. Bei nicht ausreichendem Verhältnis der Durchmesser kommt es im Leckagefall zu einer verstärkten Druckerhöhung bis hin zum Dampfdruck des eingesetzten Wärmeträgers (7) bei der entsprechenden Temperatur.

Unter "freier Querschnittsfläche" wird im Sinne der vorliegenden Erfindung die Fläche verstanden, die dem Durchfluss des Wärmeträgers (7) effektiv zur Verfügung steht.

In einer weiteren Ausführungsform weist der Wärmetauscher (1) eine Auffangeinrichtung (21) für den Wärmeträger (7) auf, die der Sicherheitseinrichtung (19) und/oder dem Notentlastungsstutzen (17) nachgelagert ist. In dem Fall, dass eine größere Menge Wärmeträger (7) durch ansteigenden Druck über die Sicherheitseinrichtung (19) und/oder den Notentlastungsstutzen (17) verdrängt wird, kann durch die Auffangeinrichtung (21) der Wärmeträger (7) aufgefangen werden, ohne aus der Anlage auszutreten. Einerseits wird hierdurch die Sicherheit erhöht, da kein Wärmeträger (7) mit hoher Temperatur austritt, andererseits kann durch die Auffangeinrichtung (21) der Wärmeträger (7) nach Behebung der Störung ohne Verunreinigung in den Wärmetauscher (1) zurückgeführt werden. Hierzu ist es insbesondere vorteilhaft, wenn die Auffangeinrichtung (21) eine Begleitheizung aufweist, um eine Erhöhung der Viskosität des Wärmeträgers (7) bis hin zu seiner Erstarrung zu verhindern. Die Auffangeinrichtung (21) kann ferner dazu dienen, Füllstandunterschiede des Wärmeträgers (7) abzupuffern und/oder den Wärmeträger (7) bei einer Abstellung der gesamten Anlage beispielsweise bei Revisionsarbeiten komplett oder teilweise aufzunehmen.

Es ist ferner bevorzugt, wenn der Wärmetauscher (1) eine Einrichtung zur Abtrennung des flüssigen Wärmeträgers (7) von einer gasförmigen Phase aufweist, die im Leckagefall eine effektive Trennung von Gas und Flüssigkeit bewirkt, wenn das austretende Stoffgemisch zweiphasig (dampf/flüssig) ist. Insbesondere ist die genannte Einrichtung am der Auffangeinrichtung (21) angeordnet.

Weiterhin ist bevorzugt, die Auffangeinrichtung (21) über einen ausreichend dimensionierten Querschnitt zur Atmosphäre hin zu belüften, um das abgetrennte Gas, beispielsweise Dampf, ohne großen Druckaufbau in der Auffangeinrichtung (21) zur Atmosphäre abzugeben. Dabei ist das Verhältnis der für die Belüftung zur Verfügung stehenden Querschnittsflächen bezogen auf die Querschnittsfläche eines Wärmetauscherrohres (3) im Bereich von 500 bis 1.000.000 zu wählen.

Es hat sich zudem als vorteilhaft erwiesen, in dem erfindungsgemäßen Wärmetauscher (1) zwischen der Sicherheitseinrichtung (19) und der Auffangeinrichtung (21) einen Abscheider (23) für einen Anteil des flüssigen Wärmeträgers (7) vorzusehen. Der Abscheider (23) soll im Leckagefall das im Normalbetrieb im Rohrleitungssystem befindliche Flüssigkeitsvolumen des Wärmeträgers (7) nach dem Notentlastungsstutzen (17) und/oder der Sicherheitseinrichtung (19) weitgehend aufnehmen, um so den Druckverlust, der, wenn man diese Maßnahme nicht vorsieht, durch einen Flüssigkeitspfropfen entsteht, wenn er durch das Rohrleitungssystem zur Auffangeinrichtung (21) gedrückt wird. Das Rückhaltevolumen des Abscheiders (23) sollte daher mindestens dem Rohrleitungsvolumen der Rohleitung zwischen der Sicherheitseinrichtung (19) und dem Abscheider (23) entsprechen.

Es hat sich für eine gleichmäßige und effiziente Temperaturverteilung als vorteilhaft erwiesen, wenn der Wärmetauscher (1) Einbauten (25) zum Umlenken des flüssigen Wärmeträgers (7) aufweist und die Einbauten (25) an oder zwischen den einzelnen Wärmetauscherrohren (3) und/oder an oder zwischen den einzelnen Wärmetauscherrohren (3) und dem Gehäuse (5) positioniert sind. Vorteilhafterweise handelt es sich bei den Einbauten (25) um Umlenkbleche, die ringförmig oder scheibenförmig ausgebildet sein können. Hierbei spricht man auch von einer "Diskand-Donut-Anordnung". Insbesondere sind die Einbauten (25) horizontal ausgerichtet, so dass der Wärmeträger (7) die Wärmetauscherrohre (3) im Wesentlichen quer anströmt.

Es ist insbesondere bevorzugt, dass der Wärmetauscher (1) ein Salzbadkühler ist und/oder dass der flüssige Wärmeträger (7) eine Salzschmelze ist. Als Salzschmelze ist eine Mischung von Alkalinitraten und Alkalinitriten bevorzugt. Besonders bevorzugte Salzmischungen bestehen aus 53 Gew.-% Kaliumnitrat, 40 Gew.-% Natriumnitrit und 7 Gew.-% Natriumnitrat bzw. 60 Gew.-% Kaliumnitrat und 40 Gew.-% Natriumnitrit. Diese Mischungen bilden ein Eutektikum und schmelzen bei ca. 142 °C. Die Arbeitstemperatur dieser Salzschmelzen liegt zwischen 200 °C und 500 °C.

Neben einem flüssigen Wärmeträger (7) in Form einer Salzschmelze ist die vorliegende Erfindung auch auf Wärmeträgeröle übertragbar. Diese Wärmeträgeröle sind in ihrer maximalen Betriebstemperatur jedoch in der Regel auf 250 °C bis 280 °C beschränkt, was für das Kühlen vieler exothermer Reaktionen, beispielsweise in Rohrbündelreaktoren, nicht ausreichend ist.

Ein weiterer Gegenstand der vorliegenden Erfindung ist eine Reaktoranordnung (101), die einen Reaktor (27), einen mit dem Reaktor (27) verbundenen Wärmetauscher (1), wie er vorstehend definiert wurde, und eine mit dem Reaktor (27) und/oder dem Wärmetauscher (1) verbundene Pumpe (29) zum Umwälzen zumindest eines Teils des flüssigen Wärmeträgers (7) umfasst.

Durch die Tatsache, dass die erfindungsgemäße Reaktoranordnung (101) den erfindungsgemäßen Wärmetauscher (1) umfasst, werden im Wesentlichen die gleichen Vorteile wie vorstehend beschrieben erreicht. Insbesondere kann in der erfindungsgemäßen Reaktoranordnung (101) ein im Wärmetauscher (1) auftretender Überdruck auf der Seite des flüssigen Wärmeträgers (7) schnell und sicher abgebaut werden. Der im Wärmetauscher (1) befindliche Wärmeträger (7) muss im Wesentlichen nicht verdrängt oder durchlaufen werden, da der Druck über die Sicherheitseinrichtung (19) des Wärmetauschers (1) abgebaut werden kann. Durch das Vorsehen des erfindungsgemäßen Wärmetauschers (1) kann das Wärmetauschersystem der Reaktoranordnung (101) somit im Wesentlichen drucklos ausgelegt werden, was die Kosten für die Reaktoranordnung (101) verringert.

Drucklos bedeutet in diesem Fall, dass keine Vorkehrungen gegen Drücke von mehr als 5 bar getroffen werden müssen. Natürlich ist die Reaktoranordnung (101) für einen Druck von bis zu 3 bar ausgelegt, den der Wärmeträger (7) hydrostatisch aufbringt und der durch eine Umwälzpumpe für den Wärmeträger (7) erzeugt wird. Zudem ist das Reaktionsvolumen des Reaktors (27) auf Seiten der Reaktionsmedien auf die herrschenden Reaktionsdrücke von bis zu 80 bar ausgelegt.

Die Formulierung "mit dem Reaktor (27) verbundener Wärmetauscher (1)" ist im Sinne der vorliegenden Erfindung so zu verstehen, dass der am Wärmetauschergehäuse (5) vorgesehene Zulauf (13) und der am Wärmetauschergehäuse (5) vorgesehene Ablauf (15) für den Wärmeträger (7) in geeigneter Weise mit entsprechenden Zu- und Abläufen des Reaktors (27) verbunden, insbesondere geschweißt, sind. Praktischerweise ist entweder im Zulauf (13) oder im Ablauf (15) eine Regelarmatur installiert, so dass die über den Wärmetauscher (1) umgewälzte Menge des flüssigen Wärmeträgers (7) und damit die Temperatur im Reaktor (27) eingestellt, bzw. geregelt werden kann.

In einer bevorzugten Ausführungsform ist der Reaktor (27) ein Rohrbündelreaktor zur Durchführung exothermer oder endothermer Reaktionen.

Dabei wird im Falle exothermer Reaktionen die bei der exothermen Reaktion entstehende Wärme durch den flüssigen Wärmeträger (7) aufgenommen und durch das Zirkulieren des Wärmeträgers (7) dem erfindungsgemäßen Wärmetauscher (1), in diesem Fall ein Kühler, zugeführt. Der erfindungsgemäße Wärmetauscher (1) kann, wie vorstehend beschrieben, ein Salzbadwärmetauscher sein. Insbesondere können die Wärmetauscherrohre (3) des Salzbadkühlers Verdampferrohre sein, in denen Wasser verdampft wird. Auf diese Art und Weise kann die bei der Reaktion freiwerdende Energie in Form von Dampf gewonnen und beispielsweise zum Antreiben von Dampfturbinen oder zu Heizzwecken gewinnbringen genutzt werden

Der erfindungsgemäße Wärmetauscher (1) kann auch zur Dampfüberhitzung eingesetzt werden. Dies ist besonders vorteilhaft, wenn der gewonnene und überhitzte Dampf z.B. über eine Dampfturbine in elektrische Energie umgewandelt werden soll. Die Nutzung der Verdampfungsenergie, d.h. der Wirkungsgrad, steigt, je mehr Energie zusätzlich zu der Verdampfungsenergie zugeführt werden kann. Hierfür wird bereits erzeugter Dampf, beispielsweise aus einem ersten erfindungsgemäßen Wärmetauscher (1), über einen weiteren erfindungsgemäßen Wärmetauscher (1) geleitet, um die Dampftemperatur zu steigern. Folglich kann mit der vorliegenden Erfindung der Wirkungsgrad deutlich gesteigert werden.

Die Reaktoranordnung (101) kann ferner einen in den Figuren nicht dargestellten Ausdehnungsbehälter aufweisen. Abhängig von der Temperatur ändert sich die Dichte des Wärmeträgers (7), das heißt, das von ihm eingenommene Volumen. Hierfür ist ein ausreichend großer Ausdehnungsraum, im vorliegenden Fall durch den Ausdehnungsbehälter, vorzusehen. Ansonsten würde durch die Ausdehnung des Wärmeträgers (7) ein weiterer Druck auf den Wärmetauscher (1) und/oder den Reaktor (27) ausgeübt werden.

Ein dritter Aspekt der vorliegenden Erfindung bildet ein Verfahren zum Temperieren eines Reaktors (27), das die Schritte
a) Einleiten zumindest eines Teils eines flüssigen Wärmeträgers (7), der mit einer ersten Temperatur T1 aus dem Reaktor (27) abgeführt wird, durch einen Zulauf in den Wärmetauscher (1) nach einem der Ansprüche 1 bis 7,
b) Umspülen der Wärmetauscherrohre (3) des Wärmetauschers (1) mit dem flüssigen Wärmeträger (7), wobei Wärme zwischen dem Wärmeträger (7) und den Wärmetauscherrohren (3) ausgetauscht wird,
c) Ableiten des flüssigen Wärmeträgers (7) mit einer zweiten Temperatur T2 aus dem Wärmetauscher (1) und Zuführen des flüssigen Wärmeträgers (7) zu dem Reaktor (27),
wobei im Falle einer Druckerhöhung in dem Wärmetauscher (1) der entstehende Überdruck zumindest über eine Sicherheitseinrichtung (19) abgebaut wird,
umfasst.

Wie vorstehend beschrieben, kann es beim Betrieb eines erfindungsgemäßen Wärmetauschers (1) als Kühler zu einem Defekt an den Wärmetauscherrohren (3) kommen. Diese Leckagen können sich dabei sowohl in Form eines oder mehrerer kleiner bis größerer Löcher als auch bis zum kompletten Abriss eines Wärmetauscherrohres (3) darstellen. In der Regel wird die Kühlmediumseite des Wärmetauschers (1) bei höherem Druck als die Wärmeträgerseite des Reaktors (27) betrieben. In diesem Fall tritt durch die Leckagestelle Kühlmedium, beispielsweise Wasser, in den flüssigen Wärmeträger (7) ein. Herrschen auf der Wärmeträgerseite Temperaturbedingungen oberhalb des Siedepunktes des Kühlmediums, verdampft das Kühlmedium recht schnell und führt dann schnell zu einer Druckerhöhung. Diese Druckerhöhung kann unerwartet und nicht vorhersehbar auftreten, so dass keine Gegenmaßnahmen in ausreichend kurzer Zeit durchgeführt werden können. Im Falle einer solchen Druckerhöhung wird der entstehende Überdruck über die Sicherheitseinrichtung (19) abgebaut, indem der entstandene Dampf die Säule des Wärmeträgers (7) in der Sicherheitseinrichtung (19) verdrängt oder diese durchdringt, so dass eine Schädigung des Wärmetauschergehäuses (5) vermieden wird. Erfindungsgemäß wird ein entstehender Überdruck ab 2 bar über die Sicherheitseinrichtung (19) abgebaut.

In der Regel beträgt im Falle des Betriebs des erfindungsgemäßen Wärmetauschers (1) als Kühler die erste Temperatur T1, mit der zumindest eines Teils des flüssigen Wärmeträgers (7) aus dem Reaktor (27) abgeführt wird, 200 °C bis 450 °C, während die zweiten Temperatur T2, mit der der flüssigen Wärmeträgers (7) aus dem Wärmetauscher (1) abgegeben wird, 120 °C bis 300 °C beträgt.

In dem erfindungsgemäßen Verfahren hat es sich als vorteilhaft erwiesen, wenn der Wärmeträger (7) in Schritt b) zwischen den Wärmetauscherrohren (3) mäandriert. Dies bedeutet, dass durch das optionale Vorhandensein von Einbauten (25) zum Umlenken des flüssigen Wärmeträgers (7) dieser im Wesentlichen quer zu den Wärmetauscherrohren (3) geführt wird. Insbesondere wird der Wärmeträger (7) am unteren Ende des Wärmetauschers (1) zugeführt und am oberen Ende des Wärmetauschers (1) durch den Ablauf (15) abgeführt. Durch diese Führung des Wärmeträgers (7) ist ein optimaler Wärmeübergang vom Wärmeträger (7) zum Kühlmedium in den Wärmetauscherrohren (3) gewährleistet.

Vorteilhafterweise wird das erfindungsgemäße Verfahren in einem Reaktor (27) als Rohrbündelreaktor zur Durchführung exothermer oder endothermer Reaktionen ausgeführt.

Dabei kann die Reaktion, die in dem Reaktor (27) durchgeführt wird, insbesondere eine partielle Gasphasenoxidation sein. Diese partielle Gasphasenoxidation umfasst bevorzugt die Oxidation von Propen zu Acrolein, Isobuten zu Methacrolein, Acrolein zu Acrylsäure, Methacrolein zu Methacrylsäure und o-Xylol zu Phthalsäureanhydrid.

In einem weiteren Aspekt der vorliegenden Erfindung wird der vorstehend beschriebene Wärmetauscher (1) zum Temperieren eines Reaktors (27) zur Durchführung exothermer Reaktionen verwendet, wobei der Reaktor (27) ein Rohrbündelreaktor und der flüssige Wärmeträger (7) eine Salzschmelze ist.

Weitere Ziele, Merkmale, Vorteile und Anwendungsmöglichkeiten ergeben sich aus der nachfolgenden Beschreibung von Ausführungsbeispielen der vorliegenden Erfindung anhand der Figuren. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbeziehung.

Es zeigen:
- Figur 1: eine schematische Darstellung eines Wärmetauschers (1) in einer Ausführungsform der Erfindung und
- Figur 2: eine schematische Darstellung einer Reaktoranordnung (101) in einer Ausführungsform der Erfindung.

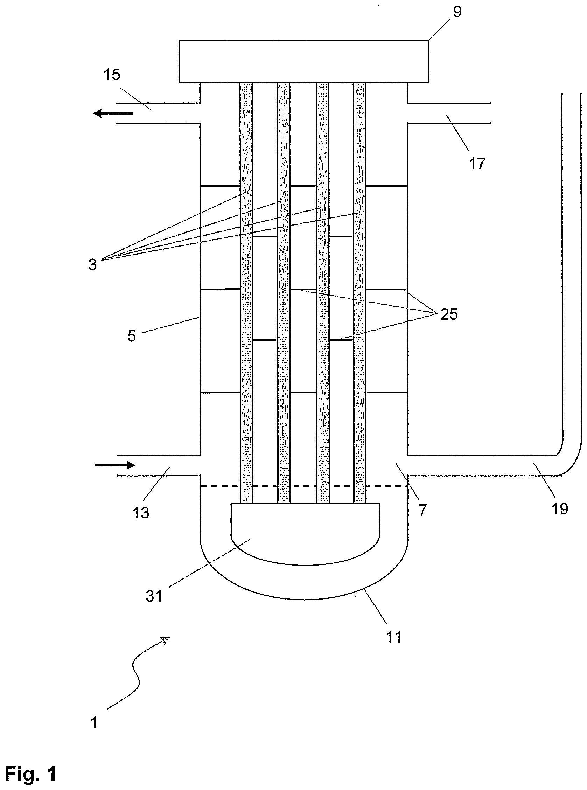

Ein erfindungsgemäßer Wärmetauscher 1 wird in Figur 1 dargestellt. Die äußere Hülle des Wärmetauschers 1 wird durch das Wärmetauschergehäuse 5, die nach oben abschließende Wärmetauscherhaube 9 und den nach unten abschließenden Wärmetauscherboden 11 gebildet. Im Inneren des Wärmetauschers 1 verlaufen, vertikal ausgerichtet, die Wärmetauscherrohre 3, die unten durch einen Wärmetauscherrohrboden 31 abgeschlossen werden. In einer Ausführungsform der Erfindung, in welcher der Wärmetauscher (1) als Kühler betrieben wird, sind die Wärmetauscherrohre 3 zumindest teilweise mit Wasser gefüllt, das von einem in Figur 1 nicht gezeigten Anschluss eingeführt wird. Zwischen den Wärmetauscherrohren 3, beziehungsweise zwischen den Wärmetauscherrohren 3 und dem Wärmetauschergehäuse 5 sind in einer Ausführungsform Umlenkbleche 25 so eingebaut, dass ein Wärmeträger 7 in mäandrierender Strömung die Wärmetauscherrohre 3 umspült.

Der flüssige Wärmeträger 7 wird durch einen am Wärmetauschergehäuse 5 vorgesehenen Zulauf 13 in der unteren Hälfte des Wärmetauschergehäuses 5 zugeführt. Bevorzugt erfolgt die Zuführung in etwa auf Höhe des Wärmetauscherrohrbodens 31. Der Wärmeträger 7 wird weitgehend quer zur Ausrichtung der Wärmetauscherrohre 3, das heißt im Wesentlichen horizontal an und zwischen den Wärmetauscherrohren 3 durchgeführt und durch die entsprechenden Umlenkbleche 25 geleitet. Der in seiner Temperatur abgekühlte Wärmeträger 7 wird durch einen am Wärmetauschergehäuse 5 vorgesehenen Ablauf 15 aus dem Wärmetauscher 1 wieder abgeführt. Der Ablauf 15 befindet sich insbesondere dicht unterhalb der Wärmetauscherhaube 9. Wie der Figur 1 zu entnehmen ist, befindet sich ein Notentlastungsstutzen 17 ebenfalls im oberen Bereich des Wärmetauschergehäuses 5 dicht unterhalb der Wärmetauscherhaube 9. Der Notentlastungsstutzen 17 hat gewöhnlich einen Durchmesser zwischen 100 mm und 800 mm. Dem gegenüber ist die erfindungsgemäße Sicherheitseinrichtung 19 im unteren Bereich des Wärmetauschergehäuses 5, insbesondere im unteren Drittel, bevorzugt im unteren Viertel, insbesondere im unteren Fünftel angeordnet. Die Sicherheitseinrichtung 19 ist insbesondere eine Notentspannung, die durch eine Art Steigleitung gebildet wird.

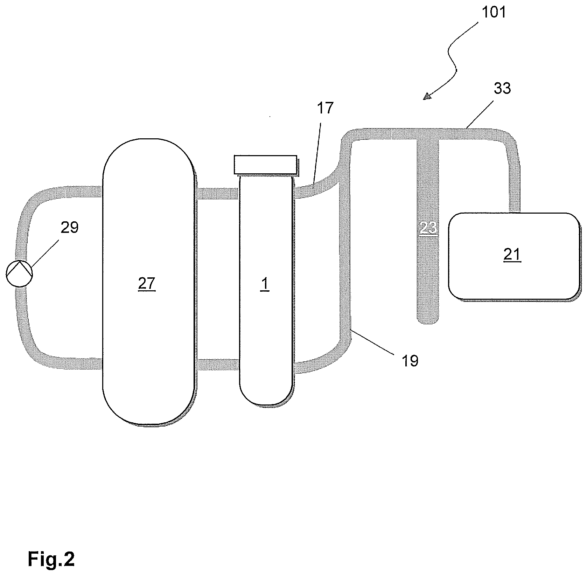

Figur 2 zeigt eine Reaktoranordnung 101 mit einem Reaktor 27, der vorzugsweise ein Rohrbündelreaktor zur Durchführung exothermer oder endothermer Reaktionen ist. In einem solchen Rohrbündelreaktor ist ein Bündel vertikal ausgerichteter Kontaktrohre zwischen zwei Rohrböden angeordnet. Die Kontaktrohre können dabei je nach Anwendungsfall mit einer Schüttung aus Katalysatormaterial (Festbettkatalysator) gefüllt sein. Die Kontaktrohre werden von dem flüssigen Wärmeträger 7 umspült, der die bei der exothermen Reaktion entstehende Wärme aufnimmt und ableitet oder der die bei der endothermen Reaktion erforderliche Wärme zuführt. Die konstanten Reaktionsbedingungen werden dadurch geschaffen, dass bei einer vorgegebenen Temperatur der Wärmeträger 7 mit einer Pumpe zur Temperierung umgewälzt wird.

Vorteilhafterweise tritt der Wärmeträger 7 in der Nähe des unteren Rohrbodens in den Reaktor 27 ein und in der Nähe des oberen Rohrbodens aus ihm aus.

Der Reaktor 27 wird von dem Wärmeträger 7 durchflossen, wobei dieser zur Zirkulation zumindest teilweise von mindestens einer Pumpe 29 umgewälzt wird. Vorteilhafterweise sind die Pumpe 29 und die entsprechenden Zu- und Ableitungen der Pumpe 29 begleitbeheizt, so dass keine ungewollte Abkühlung und damit Viskositätserniedrigung des Wärmeträgers 7 eintritt. Idealerweise ist die Pumpe 29 unmittelbar an dem Reaktorgehäuse angebracht. In der abgebildeten Ausführungsform ist im Wesentlichen gegenüber der Pumpe 29 der erfindungsgemäße Wärmetauscher 1 angeordnet. Vorteilhafterweise ist dieser mit relativ geringem Abstand, das heißt, mit einem Abstand von 10 cm bis 250 cm von dem Reaktor 27 angeordnet. Aus dem Wärmetauscher 1 führt im oberen Bereich, wie in Figur 1 bereits gezeigt, der Notentlastungsstutzen 17 heraus. Dem gegenüber ist die erfindungswesentliche Sicherheitseinrichtung 19 im unteren Bereich des Wärmetauschers 1 angeordnet.

Im Fall eines Rohrreißers, bei dem das Kühlmedium, hauptsächlich Wasser und Wasserdampf, aus den Wärmetauscherrohren 3 in den Wärmeträger 7 einströmt, wird das einströmende Wasser sehr schnell verdampft, so dass sich ein unerwartet hoher Druck im Wärmetauscher 1 aufbaut. Durch das Vorhandensein der Sicherheitseinrichtung 19 kann der im unteren Bereich des Wärmetauschers 1 entstehende Druck relativ direkt über die Sicherheitseinrichtung 19 abgeführt werden. Dies geschieht dadurch, dass die in der Sicherheitseinrichtung 19 stehende Säule von Wärmeträger 7 nach oben gedrückt wird. In der Regel befindet sich am oberen Ende dieser Wärmeträgersäule ein Bereich mit höherer Viskosität des Wärmeträgers 7 bis hin zu fast festen, hochviskosen Anteilen. Diese Anteile, das heißt, eine Art Pfropfen, werden zunächst in dem Abscheider 23, insbesondere in einem Zwischenabscheider, aufgefangen und auf diese Weise aus dem weiteren System herausgenommen. Das nachfolgende Gemisch aus Wärmeträger 7 und Wasser sowie Wasserdampf wird durch eine Rohrleitung 33 in eine nachgelagerte Auffangeinrichtung 21 geleitet. Sowohl die Sicherheitseinrichtung 19 als auch die Rohrleitung 33 und die Auffangeinrichtung 21 sind begleitbeheizt, um ein Erhöhen der Viskosität des Wärmeträgers 7 beziehungsweise ein Erstarren zu verhindern.

In der Auffangeinrichtung 21 kann der flüssige Wärmeträger 7 von dem Wasser/Wasserdampfgemisch abgetrennt werden. Dies kann insbesondere mittels einer Einrichtung zur Abtrennung des flüssigen Wärmeträgers 7 von einer gasförmigen Phase geschehen. Die Abtrennung kann durch einen Zyklonabscheider oder einfach durch Schwerkraftabscheidung erfolgen. Der Wärmeträger 7 kann dann über eine in Figur 2 nicht gezeigte Leitung dem Wärmetauscher 1 beziehungsweise dem Reaktor 27 wieder zugeführt werden.

## Patentansprüche

1. Wärmetauscher (1), umfassend
- ein Bündel von zumindest zwei Wärmetauscherrohren (3), wobei das Bündel von Wärmetauscherrohren (3) vertikal ausgerichtet ist und nach unten von einem Wärmetauscherrohrboden (31) abgeschlossen wird,
- ein das Bündel von Wärmetauscherrohren (3) umgebendes Wärmetauschergehäuse (5), wobei das Bündel von Wärmetauscherrohren (3) in dem Wärmetauschergehäuse (5) von einem flüssigen Wärmeträger (7) umspült wird,
- eine das Wärmetauschergehäuse (5) nach oben abschließende Wärmetauscherhaube (9),
- einen das Wärmetauschergehäuse (5) nach unten abschließenden Wärmetauscherboden (11),
- einen am Wärmetauschergehäuse (5) vorgesehenen Zulauf (13) für den Wärmeträger (7) in den Wärmetauscher (1),
- einen am Wärmetauschergehäuse (5) vorgesehenen Ablauf (15) für den Wärmeträger (7) aus dem Wärmetauscher (1) und
- ein Notentlastungsstutzen (17), der in der Nähe der Wärmetauscherhaube (9) angeordnet ist,
**dadurch gekennzeichnet, dass**
der Wärmetauscher (1) eine zweite Sicherheitseinrichtung (19) aufweist, die in der Nähe des Wärmetauscherbodens (11) angeordnet ist, wobei die zweite Sicherheitseinrichtung (19) eine Notentspannung ist.

2. Wärmetauscher (1) nach Anspruch 1, wobei das Verhältnis der freien Querschnittsfläche der Sicherheitseinrichtung (19) zur freien Querschnittsfläche eines Wärmetauscherrohres (3) zwischen 15 und 1.600 liegt.

3. Wärmetauscher (1) nach Anspruch 1 oder 2, wobei der Wärmetauscher (1) eine Auffangeinrichtung (21) für den Wärmeträger (7) aufweist, die der Sicherheitseinrichtung (19) und/oder dem Notentlastungsstutzen (17) nachgelagert ist.

4. Wärmetauscher (1) nach einem der Ansprüche 1 bis 3, wobei der Wärmetauscher (1) eine Einrichtung zur Abtrennung des flüssigen Wärmeträgers (7) von einer gasförmigen Phase aufweist.

5. Wärmetauscher (1) nach einem der Ansprüche 1 bis 4, wobei der Wärmetauscher (1) zwischen der Sicherheitseinrichtung (19) und der Auffangeinrichtung (21) einen Abscheider (23) für einen Anteil des flüssigen Wärmeträgers (7) aufweist.

6. Wärmetauscher (1) nach einem der Ansprüche 1 bis 5, wobei der Wärmetauscher (1) Einbauten (25) zum Umlenken des flüssigen Wärmeträgers (7) aufweist und die Einbauten (25) an oder zwischen den einzelnen Wärmetauscherrohren (3) und/oder an oder zwischen den einzelnen Wärmetauscherrohren (3) und dem Wärmetauschergehäuse (5) positioniert sind.

7. Wärmetauscher (1) nach einem der Ansprüche 1 bis 6, wobei der Wärmetauscher (1) ein SalzbadWärmetauscher und/oder der flüssige Wärmeträger (7) eine Salzschmelze ist.

8. Reaktoranordnung (101), umfassend
- einen Reaktor (27)
- einen mit dem Reaktor (27) verbundenen Wärmetauscher (1) nach einem der Ansprüche 1 bis 7,
- eine mit dem Reaktor (27) und/oder dem Wärmetauscher (1) verbundene Pumpe (29) zum Umwälzen zumindest eines Teils des flüssigen Wärmeträgers (7).

9. Reaktoranordnung (101) nach Anspruch 8, wobei der Reaktor (27) ein Rohrbündelreaktor zur Durchführung exothermer oder endothermer Reaktionen ist.

10. Verfahren zum Temperieren eines Reaktors (27), umfassend die Schritte
a) Einleiten zumindest eines Teils eines flüssigen Wärmeträgers (7), der mit einer ersten Temperatur T1 aus dem Reaktor (27) abgeführt wird, durch einen Zulauf in den Wärmetauscher (1) nach einem der Ansprüche 1 bis 7,
b) Umspülen der Wärmetauscherrohre (3) des Wärmetauschers (1) mit dem flüssigen Wärmeträger (7), wobei Wärme zwischen dem Wärmeträger (7) und den Wärmetauscherrohren (3) ausgetauscht wird,
c) Ableiten des flüssigen Wärmeträgers (7) mit einer zweiten Temperatur T2 aus dem Wärmetauscher (1) und Zuführen des flüssigen Wärmeträgers (7) zu dem Reaktor (27),
wobei im Falle einer Druckerhöhung in dem Wärmetauscher (1) der entstehende Überdruck zumindest über eine Sicherheitseinrichtung (19) abgebaut wird.

11. Verfahren nach Anspruch 10, wobei der Wärmeträger (7) in Schritt b) zwischen den Wärmetauscherrohren (3) mäandriert.

12. Verfahren nach Anspruch 10 oder 11, wobei der Reaktor (27) ein Rohrbündelreaktor zur Durchführung exothermer oder endothermer Reaktionen ist.

13. Verfahren nach einem der Ansprüche 10 bis 12, wobei die Reaktion, die in dem Reaktor (27) durchgeführt wird, eine partielle Gasphasenoxidation ist.

14. Verfahren nach Anspruch 13, wobei die partielle Gasphasenoxidation die Oxidation von Propen zu Acrolein, Isobuten zu Methacrolein, Acrolein zu Acrylsäure, Methacrolein zu Methacrylsäure und o-Xylol zu Phthalsäureanhydrid umfasst.

15. Verwendung des Wärmetauschers (1) nach einem der Ansprüche 1 bis 7 zum Kühlen eines Reaktors (27) zur Durchführung exothermer Reaktionen, wobei der Reaktor (27) ein Rohrbündelreaktor und der flüssige Wärmeträger (7) eine Salzschmelze ist.

## Claims

1. A heat exchanger (1) comprising
- a bundle of at least two heat exchanger tubes (3), wherein the bundle of heat exchanger tubes (3) has been vertically oriented and is terminated at the bottom by a heat exchanger tube plate (31),
- a heat exchanger housing (5) surrounding the bundle of heat exchanger tubes (3), wherein a liquid heat-transfer medium (7) is passed around the bundle of heat exchanger tubes (3) in the heat exchanger housing (5),
- a heat exchanger cap (9) sealing the top of the heat exchanger housing (5),
- a heat exchanger bottom (11) sealing the bottom of the heat exchanger housing (5),
- a feed point (13) for the heat-transfer medium (7), wherein said feed point is provided on the heat exchanger housing (5) and leads into the heat exchanger (1),
- an outlet (15) for the heat-transfer medium (7), wherein said outlet is provided on the heat exchanger housing (5) and leads out of the heat exchanger (1),
- an emergency relief port (17) disposed in proximity to the heat exchanger cap (9),
wherein
the heat exchanger (1) comprises a second safety device (19) disposed in proximity to the heat exchanger bottom (11), wherein the second safety device (19) is an emergency depressurization means.

2. The heat exchanger (1) according to claim 1, wherein the ratio of the free cross sectional area of the safety device (19) to the free cross sectional area of a heat exchanger tube (3) is between 15 and 1600.

3. The heat exchanger (1) according to claims 1 or 2, wherein the heat exchanger (1) comprises a containing means (21) for the heat transfer medium (7), wherein said containing means is connected downstream of the safety device (19) and/or the emergency relief port (17) .

4. The heat exchanger (1) according to any one of claims 1 to 3, wherein the heat exchanger (1) comprises a device for removing the liquid heat-transfer medium (7) from a gaseous phase.

5. The heat exchanger (1) according to any one of claims 1 to 4, wherein between the safety device (19) and the containing means (21) the heat exchanger (1) comprises a separator (23) for a portion of the liquid heat-transfer medium (7).

6. The heat exchanger (1) according to any one of claims 1 to 5, wherein the heat exchanger (1) comprises internals (25) for deflecting the liquid heat-transfer medium (7) and the internals (25) are positioned at or between the individual heat exchanger tubes (3) and/or at or between the individual heat exchanger tubes (3) and the heat exchanger housing (5).

7. The heat exchanger (1) according to any one of claims 1 to 6, wherein the heat exchanger (1) is a salt bath heat exchanger and/or the liquid heat-transfer medium (7) is a salt melt.

8. A reactor arrangement (101) comprising
- a reactor (27)
- a heat exchanger (1) according to any one of claims 1 to 7 connected to the reactor (27),
- a pump (29) for circulating at least some of the liquid heat-transfer medium (7), wherein said pump is connected to the reactor (27) and/or the heat exchanger (1) .

9. The reactor arrangement (101) according to claim 8, wherein the reactor (27) is a shell-and-tube reactor for carrying out exothermic or endothermic reactions.

10. A method for controlling the temperature of a reactor (27) comprising the steps of
a) introducing, via a feed point, into the heat exchanger (1) according to any one of claims 1 to 7 at least some of a liquid heat-transfer medium (7) discharged from the reactor (27) at a first temperature T1,
b) passing the liquid heat-transfer medium (7) around the heat exchanger tubes (3) of the heat exchanger (1) to exchange heat between the heat-transfer medium (7) and the heat exchanger tubes (3),
c) draining the liquid heat-transfer medium (7) from the heat exchanger (1) at a second temperature T2 and supplying the liquid heat-transfer medium (7) to the reactor (27),
wherein in the event of a pressure increase in the heat exchanger (1), the overpressure which arises is reduced via at least one safety device (19).

11. The method according to claim 10, wherein in step b) the heat-transfer medium (7) meanders between the heat exchanger tubes (3).

12. The method according to claim 10 or 11, wherein the reactor (27) is a shell-and-tube reactor for carrying out exothermic or endothermic reactions.

13. The method according to any one of claims 10 to 12, wherein the reaction carried out in the reactor (27) is a partial gas phase oxidation.

14. The method according to claim 13, wherein the partial gas phase oxidation comprises the oxidation of propene to acrolein, isobutene to methacrolein, acrolein to acrylic acid, methacrolein to methacrylic acid and o-xylene to phthalic anhydride.

15. The use of the the heat exchanger (1) according to any one of claims 1 to 7 for cooling a reactor (27) for carrying out exothermic reactions, wherein the reactor (27) is a shell-and-tube reactor and the liquid heat-transfer medium (7) is a salt melt.

## Revendications

1. Échangeur de chaleur (1) comprenant
- un faisceau d'au moins deux tubes d'échangeur de chaleur (3), le faisceau de tubes d'échangeur de chaleur (3) étant orienté verticalement et fermé vers le bas par un fond de tube d'échangeur de chaleur (31),
- un boîtier d'échangeur de chaleur (5) entourant le faisceau de tubes d'échangeur de chaleur (3), le faisceau de tubes d'échangeur de chaleur (3) placé dans le boîtier d'échangeur de chaleur (5) étant entouré par un caloporteur liquide (7),
- un capot d'échangeur de chaleur (9) fermant vers le haut le boîtier d'échangeur de chaleur (5),
- un fond d'échangeur de chaleur (11) fermant vers le bas le boîtier d'échangeur de chaleur (5),
- une entrée (15) prévue au niveau du boîtier d'échangeur de chaleur (5) et destinée à l'entrée du caloporteur (7) dans l'échangeur de chaleur (1),
- une sortie (13) prévue au niveau du boîtier d'échangeur de chaleur (5) et destinée à la sortie du caloporteur (7) de l'échangeur de chaleur (1) et
- une buse de décharge d'urgence (17), disposée à proximité du capot d'échangeur de chaleur (9),
**caractérisé en ce que**
l'échangeur de chaleur (1) comporte un deuxième dispositif de sécurité (19) disposé à proximité du fond d'échangeur de chaleur (11), le deuxième dispositif de sécurité (19) étant une détente d'urgence.

2. Échangeur de chaleur (1) selon la revendication 1, le rapport de la section transversale libre du dispositif de sécurité (19) à la section transversale libre d'un tube d'échangeur de chaleur (3) étant compris entre 15 et 1600.

3. Échangeur de chaleur (1) selon la revendication 1 ou 2, l'échangeur de chaleur (1) comportant un dispositif collecteur (21) destiné au caloporteur (7) et situé en aval du dispositif de sécurité (19) et/ou de la buse de décharge d'urgence (17).

4. Échangeur de chaleur (1) selon l'une des revendications 1 à 3, l'échangeur de chaleur (1) comportant un dispositif de séparation du caloporteur liquide (7) d'une phase gazeuse.

5. Échangeur de chaleur (1) selon l'une des revendications 1 à 4, l'échangeur de chaleur (1) comprenant entre le dispositif de sécurité (19) et le dispositif collecteur (21) un séparateur (23) destiné à une partie du caloporteur liquide (7).

6. Échangeur de chaleur (1) selon l'une des revendications 1 à 5, l'échangeur de chaleur (1) comporte des éléments intégrés (25) destinés à dévier le caloporteur liquide (7) et les éléments intégrés (25) étant positionnés au niveau des tubes d'échangeur de chaleur individuels (3) ou entre ceux-ci et/ou au niveau des tubes d'échangeur de chaleur individuels (3) et du boîtier d'échangeur de chaleur (5) ou entre ceux-ci.

7. Échangeur de chaleur (1) selon l'une des revendications 1 à 6, l'échangeur de chaleur (1) étant un échangeur de chaleur à bain de sel et/ou le caloporteur liquide (7) étant un sel fondu.

8. Ensemble formant réacteur (101) comprenant
- un réacteur (27)
- un échangeur de chaleur (1), relié au réacteur (27), selon l'une des revendications 1 à 7,
- une pompe (29) reliée au réacteur (27) et/ou à l'échangeur de chaleur (1) et destinée à faire circuler au moins une partie du caloporteur liquide (7).

9. Ensemble formant réacteur (101) selon la revendication 8, le réacteur (27) étant un réacteur à faisceau de tubes destiné à réaliser des réactions exothermiques ou endothermiques.

10. Procédé de régulation de température d'un réacteur (27), le procédé comprenant les étapes suivantes :
a) introduire au moins une partie d'un caloporteur liquide (7), qui est déchargée du réacteur (27) à une première température T1, par une entrée dans l'échangeur de chaleur (1) selon l'une des revendications 1 à 7,
b) rincer les tubes d'échangeur de chaleur (3) de l'échangeur de chaleur (1) avec le caloporteur liquide (7), de la chaleur étant échangée entre le caloporteur (7) et les tubes d'échangeur de chaleur (3),
c) évacuer le caloporteur liquide (7) à une deuxième température T2 de l'échangeur de chaleur (1) et amener le caloporteur liquide (7) au réacteur (27),
dans le cas d'une augmentation de pression dans l'échangeur de chaleur (1), la surpression résultante étant réduite au moins par l'intermédiaire d'un dispositif de sécurité (19).

11. Procédé selon la revendication 10, le fluide caloporteur (7) serpentant à l'étape b) entre les tubes d'échangeur de chaleur (3).

12. Procédé selon la revendication 10 ou 11, le réacteur (27) étant un réacteur à faisceau de tubes destiné à mettre en oeuvre des réactions exothermiques ou endothermiques.

13. Procédé selon l'une des revendications 10 à 12, la réaction réalisée dans le réacteur (27) étant une oxydation partielle en phase gazeuse.

14. Procédé selon la revendication 13, l'oxydation partielle en phase gazeuse comprenant l'oxydation du propène en acroléine, de l'isobutène en méthacroléine, de l'acroléine en acide acrylique, de la méthacroléine en acide méthacrylique et de l'o-xylène en anhydride phtalique.

15. Utilisation de l'échangeur de chaleur (1) selon l'une des revendications 1 à 7 pour refroidir un réacteur (27) réalisant des réactions exothermiques, le réacteur (27) étant un réacteur à faisceau de tubes et le caloporteur liquide (7) étant un sel fondu.
